Europäisches Patentamt

European Patent Office

Office européen des brevets

(19)

(11) Numéro de publication : **0 067 778**
**B1**

# (12) FASCICULE DE BREVET EUROPÉEN

(45) Date de publication du fascicule du brevet :
**20.02.85**

(21) Numéro de dépôt : **82420072.9**

(22) Date de dépôt : **09.06.82**

(51) Int. Cl.⁴ : **B 27 N 5/00**, B 30 B 11/04, C 10 L 5/44

(54) **Machine automatique pour la formation d'agglomérés combustibles à base de sciure de bois compacte et de colle.**

(30) Priorité : **09.06.81 FR 8111778**
**27.05.82 FR 8209623**

(43) Date de publication de la demande :
**22.12.82 Bulletin 82/51**

(45) Mention de la délivrance du brevet :
**20.02.85 Bulletin 85/08**

(84) Etats contractants désignés :
**CH DE GB IT LI SE**

(56) Documents cités :
**FR-A- 839 271**
**US-A- 3 192 561**
**US-A- 3 706 540**
**US-A- 3 973 922**

(73) Titulaire : **Besqueut, Robert**
**23 route de Saugues**
**Espally St. Marcel-43000 Le Puy (FR)**

(72) Inventeur : **Besqueut, Robert**
**23 route de Saugues**
**Espally St. Marcel-43000 Le Puy (FR)**

(74) Mandataire : **Dupuis, François**
**Cabinet Charras 3 Place de l'Hôtel-de-Ville**
**F-42000 St. Etienne (FR)**

Jouve, 18, rue St-Denis, 75001 Paris, France

**Description**

L'invention concerne une machine automatique pour la formation d'agglomérés combustibles à base de sciure de bois compacte et de colle.

On connaît bien les propriétés calorifiques de la sciure de bois existant en quantité importante et inutilisée dans les scieries. Selon la présente invention, on a voulu réaliser une machine automatique permettant directement l'utilisation de cette sciure en vrac, pour former des briquettes solides et homogènes judicieusement compactées et séchées, en vue de leur utilisation comme combustible.

L'invention telle qu'elle est caractérisée dans son principe dans la revendication 1 est remarquable en ce qu'elle est établie avec un réceptacle supérieur avec moyen de distribution automatique et de mélange de la sciure et de la colle liquide ou autre liant, pour l'obtention d'un produit homogène à l'état pâteux qui est acheminé quantitativement après formation, et de par l'ouverture d'une trappe inférieure à commande automatique, dans un réceptacle inférieur muni d'un moyen transporteur par vis ou bande sans fin, dans une chambre de compactage maintenue en position d'ouverture et de réception par l'effacement d'un tiroir chargeur transversal à commande par vérin pneumatique ; la fermeture du tiroir autorisant l'arrêt de distribution du produit venant dudit réceptacle inférieur et son refoulement et compactage transversal dans l'intérieur de ladite chambre délimitée en outre en hauteur, par un piston ou plateau supérieur se déplaçant verticalement en passant dans l'ouverture fermée du tiroir, par les côtés latéraux dudit tiroir et par le fond de la chambre précitée ; le compactage vertical du produit obtenu par le déplacement descendant et les frappes successives du piston supérieur commandé par vérin, permet la formation de la briquette qui, après l'effacement du tiroir en position d'ouverture, par un tiroir d'éjection latéral commandé par un vérin, est évacuée sur un tapis sans fin muni d'un moyen de séchage et d'avancement pas à pas, commandé par le déplacement de ledit tiroir d'éjection.

Suivant une autre caractéristique et en variante, on utilise une colle à l'état pulvérulent qui est mélangée quantitativement avec la sciure humide, dans un réceptacle supérieur pivotant et ensuite versée par retournement, dans un réceptacle inférieur, en vue de son chauffage pour la transformation du mélange, en un état pâteux ou visqueux malaxé en permanence, puis transférée par retournement dudit réceptacle inférieur, sur la bande sans fin qui l'achemine en cet état pâteux dans la chambre de compactage pour la formation de briquettes et leur évacuation à l'état solide.

De plus amples caractéristiques de la présente invention apparaîtront à la lecture des autres revendications dépendantes et de la description des différents modes de réalisation montrés sur les figures. Pour bien fixer l'objet de l'invention, sans toutefois le limiter, aux figures des dessins annexés :

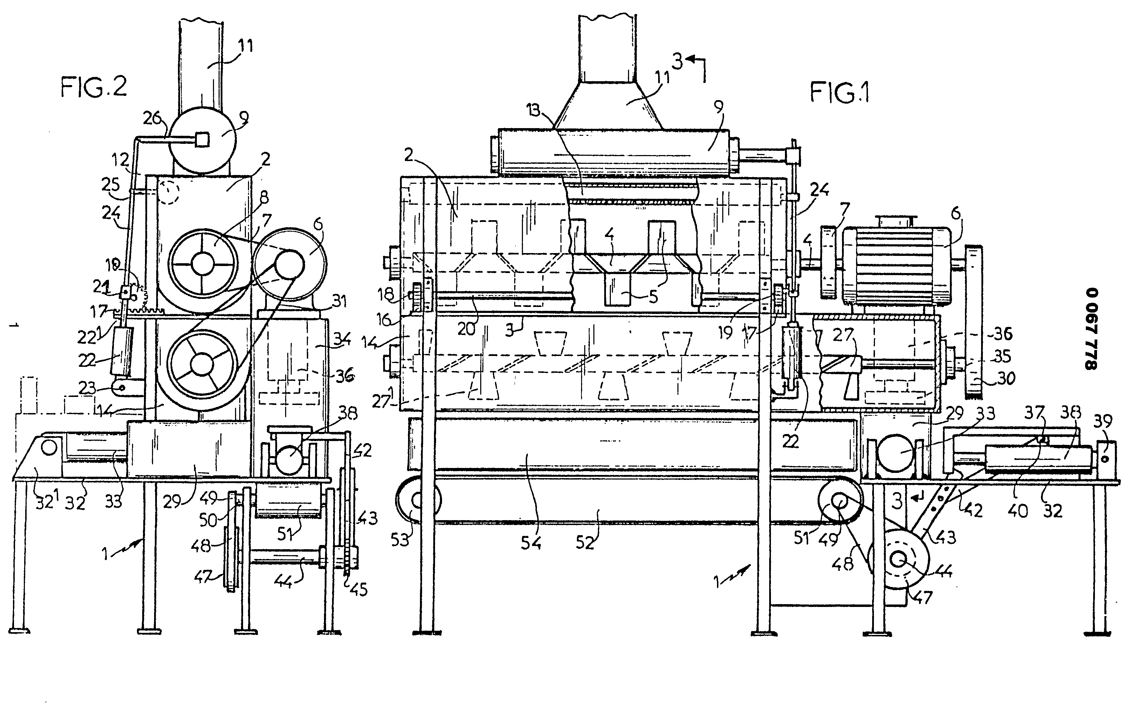

La figure 1 est une vue de face avec coupe partielle de la machine automatique.

La figure 2 est une vue extérieure de profil correspondant à la figure 1.

La figure 3 est une vue de profil en coupe transversale suivant la ligne 3-3 de la figure 1. Le tiroir transversal est représenté en position d'admission du produit dans la chambre de compactage, tandis que la trappe d'évacuation du réceptacle supérieur est ouverte.

La figure 4 est une vue semblable à la figure 3, mais le tiroir transversal est représenté fermé pour l'acheminement et le compactage du produit par le piston vertical.

La figure 5 est une vue en plan et en coupe du tiroir suivant la ligne 5-5 de la figure 3.

La figure 6 est une vue arrière partielle et en coupe illustrant le compactage du produit par le piston vertical.

La figure 7 est une vue semblable à la figure 6, mais après le compactage et lors de l'éjection de la briquette par le tiroir d'éjection.

La figure 8 est une vue partielle en perspective illustrant la vis mélangeuse.

La figure 9 est une vue en perspective de la machine automatique selon une réalisation en première variante.

La figure 10 est une vue extérieure de profil, correspondant à la figure 9.

La figure 11 est une vue de face avec coupe partielle de la machine automatique selon une réalisation en deuxième variante.

La figure 12 est une vue extérieure de profil correspondant à la figure 11.

La figure 13 est une vue partielle en perspective illustrant une vis mélangeuse selon la réalisation en deuxième variante.

La figure 14 est une vue partielle de profil, en coupe transversale, suivant la ligne 14-14 de la figure 11, lors de la phase d'admission de la sciure et de la colle dans le réceptacle supérieur, en vue du mélange de ces composants.

La figure 15 est une vue semblable à la figure 14, mais le réceptacle supérieur est pivoté en vue du chargement du mélange dans le réceptacle inférieur destiné à l'obtention par chauffage et malaxage, de l'état pâteux du mélange sciure et colle.

La figure 16 est une vue semblable aux figures 14 et 15, mais le réceptacle inférieur est pivoté en vue du chargement du mélange en l'état pâteux, sur le transporteur à bande, pour l'acheminer dans la chambre de compactage.

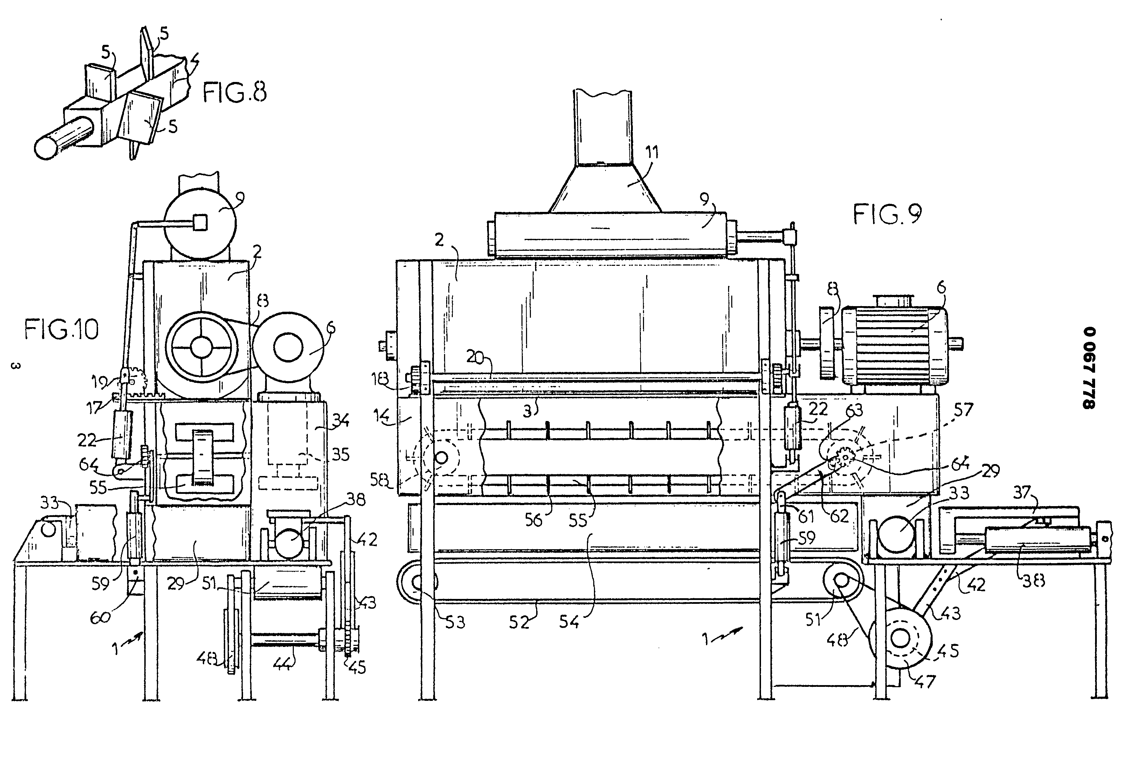

Selon la présente invention et dans l'exemple nullement limitatif illustré aux dessins, cette machine automatique est établie essentiellement avec une ossature métallique (1) supportant longitudinalement à sa partie supérieure, un réceptacle (2) à fond arrondi, muni à sa base d'une trappe coulissante (3) avec moyen de commande. Ce réceptacle (2) est traversé intérieurement par un arbre rotatif (4) à section carrée de préférence, muni extérieurement suivant ses côtés respectifs, de pâles méplates, alternées (5), disposées angulairement et successivement en hélice, comme illustré figure 8, de manière à assurer, à l'intérieur dudit réceptacle (2), le brassage d'un mélange colle et sciure de bois, en vue de l'obtention d'un produit pâteux parfaitement homogène. L'arbre (4) est entraîné en rotation au moyen d'un moteur (6) fixé sur l'ossature (1) et coopérant par courroie (7) avec une poulie (8) clavetée en bout de l'extrémité extérieure débordante dudit arbre (4).

Il faut considérer que l'acheminement quantitatif de la sciure dans le réceptacle (2) ainsi que du produit liant tel que colle, s'effectue par l'intermédiaire d'un doseur rotatif (9) fixé sur l'ouverture supérieure du réceptacle (2) et muni, à la façon connue, de palettes (10) permettant, lors de leur rotation partielle et successive, la fermeture ou l'ouverture de la distribution de la sciure venant directement du tuyau d'arrivée (11). La distribution de colle est obtenue au moyen d'un doseur (12) avec boisseau intérieur rotatif (13) permettant de déverser une quantité de colle dans le réceptacle (2), en combinaison avec la distribution de la sciure. On note que l'ouverture automatique des doseurs (9 et 12) s'effectue en combinaison avec la fermeture de la trappe coulissante (3).

A cet effet, la trappe transversale (3) mettant en communication le réceptacle supérieur (2) avec le réceptacle distributeur inférieur (14), est montée sur des glissières appropriées et reçoit transversalement à ses extrémités, deux blocs crémaillères (16 et 17) qui engrènent avec les roues dentées (18 et 19) montées sur un arbre rotatif (20) tournant dans des paliers solidaires de l'ossature (1). L'arbre rotatif (20) est muni à l'une de ses extrémités, d'une manivelle (21) qui est accouplée à la tige mobile (22¹) d'un vérin pneumatique (22) fixé et articulé de par son fût, sur une patte-support (23) solidaire de l'ossature (1). Une bielle (24) accouplée également à la manivelle (21), relie à articulation les extrémités des bras (25 et 26) montés respectivement en bout du boisseau (13) et de l'arbre rotatif commun aux palettes (10), de manière à permettre un synchronisme, lors du développement de la tige (22¹) du vérin (22), la commande simultanée de la trappe (3) et des doseurs (9 et 12).

Le réceptacle distributeur inférieur (14) est muni intérieurement et longitudinalement à sa base, d'une vis de distribution (27) comportant des spires hélicoïdales interrompues (27¹) destinées à acheminer lentement, tout en maintenant un certain mélange, le produit pâteux jusqu'à une partie extrême débordante dudit réceptacle (14) avec ouverture (14¹) disposée en regard d'un tiroir-chargeur (29). La vis de distribution (27) est entraînée en rotation par roue (30) reliée par courroie (31) à l'arbre du moteur (6) servant également à l'entraînement de l'arbre (4). Le tiroir-chargeur (29) disposé transversalement et perpendiculairement au-dessous de l'extrémité débordante du réceptacle inférieur (14), se présente avec une section en U renversé, avec ailes latérales (29¹ et 29²) prenant appui et guidage sur une plaque-support (32) solidaire de l'ossature (1).

Ce tiroir (29) comporte en outre, sur sa face supérieure et à l'avant, une ouverture rectangulaire (29³) autorisant lors de son ouverture, le libre déversement du produit pâteux, tandis qu'un fond ou cloison (29⁴) autorise du côté opposé, l'accouplement de la tige (33¹) d'un vérin pneumatique (33) accouplé à l'arrière de par son fût, dans une chape (32¹) solidaire de la plaque-support (32).

De ce fait, le tiroir-chargeur (29) coulisse vers l'avant pour engager sa section dans l'intérieur d'une chambre fermée (34) de section correspondante, avec un fond constitué par la plaque (33). Un plateau (35) ou piston, est logé verticalement, au-dessus du tiroir (29), dans la chambre (34), tout en étant commandé verticalement par la tige (36¹) d'un vérin (36) dont le fût est solidaire de ladite colonne.

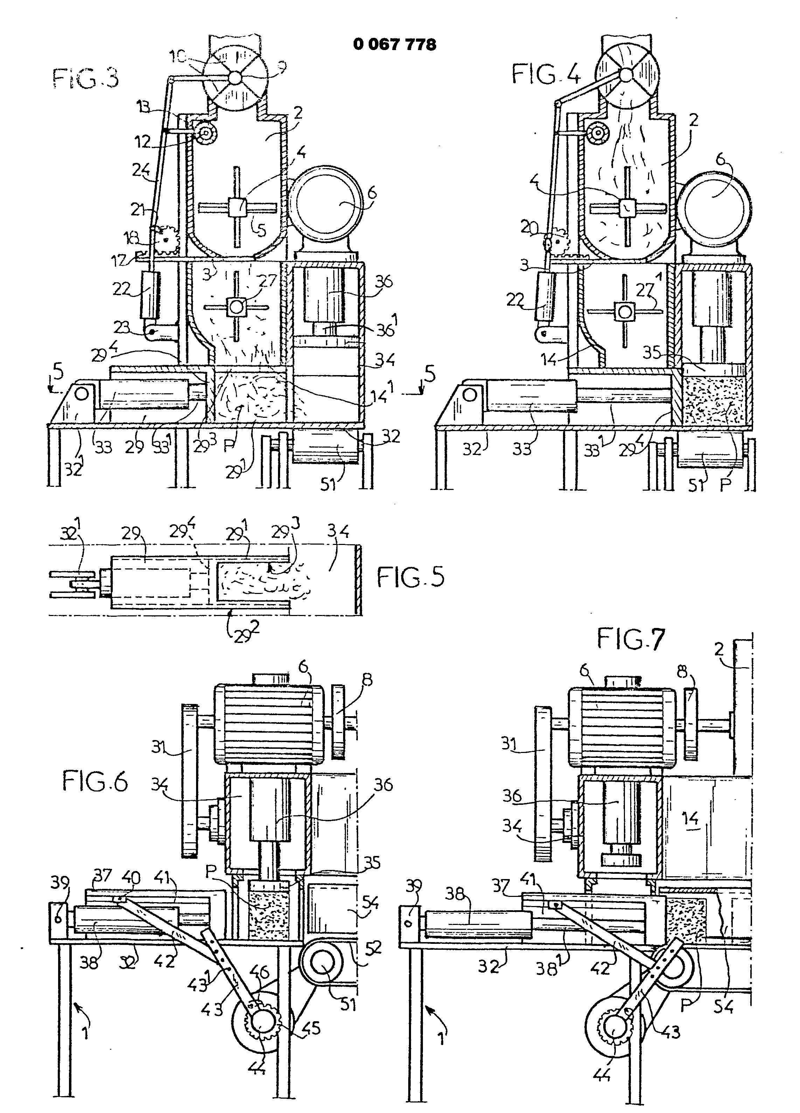

Selon cette disposition, l'on conçoit qu'en position de recul, le tiroir-chargeur (29) présente son ouverture supérieure (29³), en regard de l'ouverture (14¹) du réceptacle, pour permettre le déversement du produit pâteux dont la quantité est obtenue par la vitesse de rotation de la vis (27) et le nombre de ses spires (27¹). Ce produit s'écoule en partie dans la section inférieure de la chambre (34), jusqu'au fond (29⁴), comme illustré figure 3.

La mise en pression du vérin (33) provoque le déplacement vers l'avant du tiroir-chargeur (29) qui s'engage dans la section intérieure de la chambre (34) en compactant et en refoulant le produit (P). Ce déplacement vers l'avant autorise également le positionnement de l'ouverture (29³) en regard de la section du plateau (35), tandis que l'orifice (14¹) du réceptacle (14) est obturé par la partie supérieure arrière pleine, comme illustré figure 4.

L'on conçoit qu'après cette opération de fermeture, le produit (P) compacté transversalement est maintenu dans une enceinte parallélépipèdique, correspondant à la section de la briquette à obtenir et formée successivement par la plaque (32) constituant le fond, la cloison (29⁴) du tiroir-chargeur (29), les côtés latéraux (29¹ et 29²), le plateau (35) et la face avant de la chambre (34).

Le vérin vertical (36) est ensuite sollicité pour le déplacement et la frappe en plusieurs fois, du plateau (35) qui passe dans l'ouverture (29³) du tiroir (29), pour agir en hauteur sur le produit (P), de manière à assurer son compactage définitif.

Le tiroir-chargeur (29) recule jusqu'à une nouvelle position d'admission du produit pâteux, tandis que le plateau (35) occupe la position haute d'effacement.

Il faut considérer qu'un tiroir d'éjection (37) est également prévu pour permettre l'évacuation des briquettes sur un tapis sans fin muni d'un moyen de chauffage.

A cet effet, les côtés transversaux extrêmes de la chambre (34) sont ouverts pour autoriser, après le recul et l'effacement du tiroir-chargeur (29), le libre engagement interne de l'extrémité du tiroir d'éjection (37), de section en U renversé, et ainsi disposé perpendiculairement. Ce tiroir (37) prend appui et guidage de par ses ailes verticales, sur la plaque (32), tout en étant accouplé à l'avant, à la tige mobile (38¹) d'un vérin (38) à commande pneumatique, dont le fût est fixé à articulation, dans une chape (39) solidaire de ladite plaque (32).

Il faut considérer également que l'une des ailes verticales du tiroir (37) est rendue extérieurement solidaire d'un axe débordant (40) coulissant dans une fente d'un guide (41) et dont l'extrémité est accouplée à articulation, à l'extrémité d'une bielle (42) fixée à l'opposé, d'une manière réglable en position, à l'un des trous (43¹) d'un bras manivelle (43) pivotant à libre rotation en bout d'un arbre transversal (44) fixé sur une semelle inférieure disposée sous la plaque (32) et au droit de la chambre (34). Une roue à rochet (45) solidaire de l'arbre (44), coopère avec le cliquet (46) monté pivotant sur le bras (43), de manière à permettre lors de l'avancement du tiroir (37), l'entraînement partiel en rotation de l'arbre (44).

Du côté opposé, l'arbre (44) reçoit une roue dentée (47) qui par l'intermédiaire d'une chaîne (48) ou autre moyen, transmet le mouvement de rotation partielle dans un rapport de multiplication déterminé, à un pignon (49) monté en bout de l'arbre (50) d'entraînement du tambour (51) d'un tapis sans fin (52), avec tambour de renvoi opposé (53). Ce tapis sans fin (52), monté dans le prolongement de la plaque (32), permet lors de l'avancement du tiroir d'éjection (37), de recueillir chaque briquette au sortir de la chambre (34) et de l'acheminer ainsi pas à pas, jusqu'à l'extrémité, en vue de sa manutention pour le stockage.

Il faut remarquer également qu'une gaine chauffante (54) peut être adjointe au-dessus du tapis (52), pour assurer le séchage définitif des briquettes, au fur et à mesure de leur avancement pas à pas.

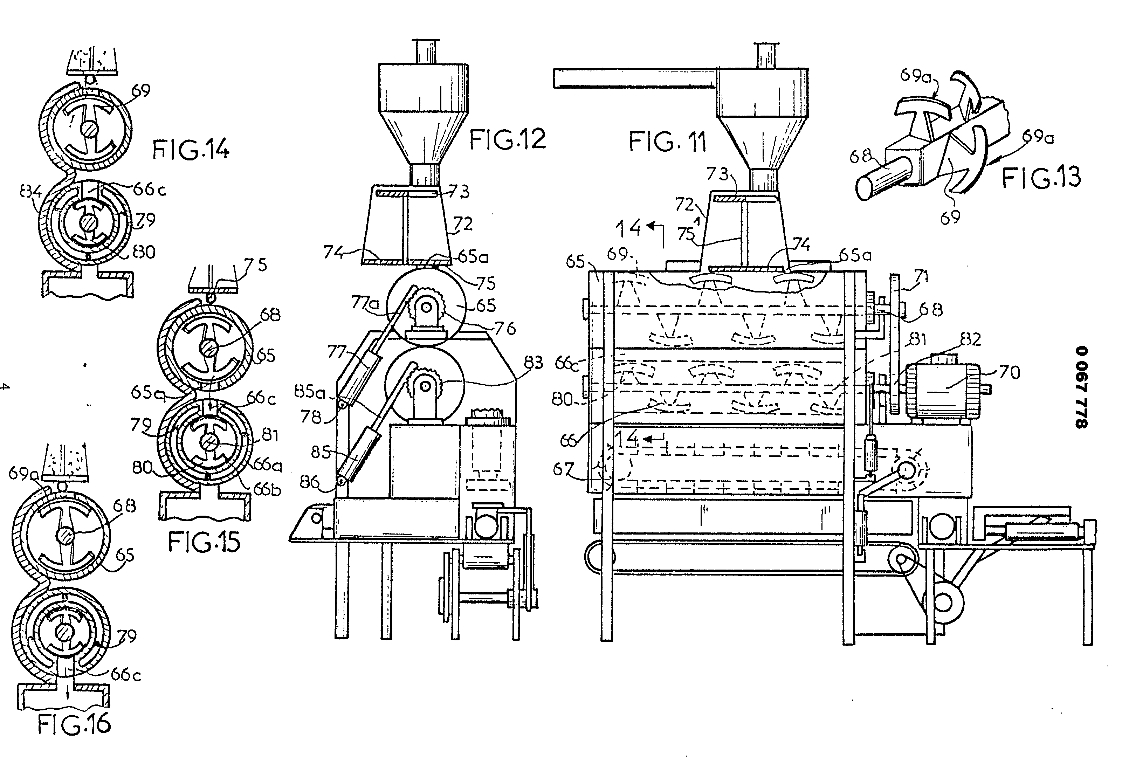

Dans une réalisation en première variante illustrée figures 9 et 10, les mêmes caractéristiques se retrouvent, mais la vis de distribution (27) logée dans le réceptacle distributeur inférieur (14), est remplacée par un transporteur à bande (55) muni de palettes (56) et monté sur des tambours rotatifs (57 et 58). Ce transporteur à bande (55) achemine pas à pas le produit pâteux, après l'ouverture de la trappe (3) dans la partie extrême débordante du réceptacle inférieur (14), pour provoquer son déversement dans l'ouverture (29³) du tiroir (29).

Il est important de considérer que la commande en rotation pas à pas du transporteur à bande (55), en liaison avec les déplacements du tiroir-chargeur (29), du plateau (35) et du tiroir d'éjection (37), est assurée par l'intermédiaire d'un vérin pneumatique (59) fixé extérieurement sur une patte-support (60) de l'ossature (1) et dont la tige mobile (61) est accouplée à articulation à l'extrémité d'un levier à cliquet (62) agissant alternativement lors de son pivotement et de par son cliquet (63), sur une roue à rochet (64) montée sur l'arbre du tambour d'entraînement (57).

Cette alimentation par transporteur à bande permet d'obtenir la régulation et la distribution intermittente du produit pâteux.

Cette machine ainsi décrite, il convient d'en résumer les principales phases de fonctionnement :

— Fermeture de la trappe transversale (3), en combinaison avec l'ouverture du doseur (9) à palettes (10) et de distribution de la sciure, et également l'ouverture du boisseau (13) du distributeur de colle (12), au moyen du vérin pneumatique (22) ;

— Brassage du mélange sciure et colle dans le réceptacle (2), au moyen de l'arbre (4) avec pâles (5) ;

— Ouverture de la trappe (3) et fermetures combinées du doseur (9) et du distributeur (12) ;

— Acheminement du produit pâteux logé dans le réceptacle inférieur (14), dans l'ouverture (29³) du tiroir-chargeur (29), au moyen de la vis de distribution (27) ou du transporteur à bande (55) ;

— Déplacement et fermeture du tiroir-chargeur (29) pour compacter le produit pâteux et fermer l'orifice du réceptacle (14) ;

— Frappes successives du plateau supérieur (35) commandé par le vérin vertical (36), pour compacter en hauteur le produit (P) enchâssé en formant une briquette ;

— Recul du tiroir-chargeur (29) jusqu'à la position d'ouverture du réceptacle inférieur (14) ;

— Déplacement du tiroir d'éjection (37) pour amener la briquette compactée sur le tapis sans fin (52), en vue de son évacuation pas à pas ;

— Séchage de la briquette.

Il est bien évident que le synchronisme et le décalage des commandes des vérins (22, 33, 36 et 59), sont assurés soit mécaniquement par un tambour entraîné par moteur et muni périphériquement de cames débordantes pour agir respectivement sur des vannes d'ouverture et de fermeture, soit encore par des contacts électriques appropriés.

Selon une réalisation en deuxième variante illustrée figures 11, 12, 13, 14, 15 et 16, on utilise une colle à l'état pulvérulent qui est mélangée quantitativement dans un premier temps, dans un réceptacle supérieur (65) pivotant, avec de la sciure humide venant du collecteur, tandis que le mélange obtenu est évacué par écoulement, dans un deuxième temps, dans un réceptacle inférieur (66) muni d'un moyen de chauffage pour transformer le mélange, par suite de la propriété de ramollissement de la colle sous l'effet de la chaleur, en un état pâteux ou visqueux. Ce produit obtenu est déversé chaud par écoulement sur le transporteur à bande (67), en vue de sa distribution dans le magasin de compactage, selon les caractéristiques définies ci-avant.

A cet effet, l'ossature métallique de la machine supporte longitudinalement à sa partie supérieure, le réceptacle supérieur (65) de forme cylindrique dans l'exemple illustré, monté à libre rotation horizontale de par ses côtés, autour d'un axe (68). Cet axe (68) reçoit à l'intérieur du réceptacle (65), des pales alternées (69), en forme de T avec secteurs circulaires (69a), pour constituer des raclettes agissant circulairement sur la paroi interne dudit réceptacle (65). Ces pales (69) sont en outre disposées angulairement et successivement en hélice, comme illustré figure 13. L'axe (68) est entraîné en rotation au moyen d'un moteur (70) avec poulie (71) et courroie de liaison, ou encore directement, par moteur réducteur.

Le réceptacle supérieur (65) forme, suivant sa génératrice, une ouverture axiale (65a) qui se présente normalement vers le haut, en regard d'un doseur vertical (ou horizontal) constitué par une chambre tronconique (72) se présentant en regard du tuyau d'arrivée du distributeur de sciure.

Deux disques étagés (73 et 74), montés sur un axe vertical (75¹) tournant dans le doseur, comportent respectivement des ouvertures diamétralement opposées, pour autoriser en combinaison, soit l'opération de remplissage de sciure dans la chambre (72), par suite de l'ouverture du disque (73) placé en regard du tuyau d'arrivée, et fermeture de la partie pleine du disque (74) placé en regard de l'ouverture axiale (65a) du réceptacle (65), soit au contraire, par fermeture rotative du disque (73), la distribution quantitativement contrôlée de la sciure contenue dans la chambre (72), dans le réceptacle (65).

Ce doseur peut être actionné par vérin ou par moteur, agissant en combinaison avec le pivotement du réceptacle (65).

Un tube (75) muni de trous, est disposé longitudinalement au-dessus de l'ouverture (65a), pour la distribution du produit agglomérant à l'état pulvérulent, dans le réceptacle (65), au moyen d'un doseur non représenté.

Le réceptacle supérieur (65) est rendu solidaire à son extrémité, d'un pignon (76) coopérant avec une crémaillère fixée sur le piston mobile (77a) d'un vérin (77) dont le fût est articulé sur un axe (78) solidaire de l'ossature. Ce vérin (77) autorise la rotation de 180 degrés du réceptacle, en vue du déversement du mélange, après son malaxage par les pales (69), dans le réceptacle inférieur (66).

Le réceptacle (66) disposé horizontalement, constitue un corps cylindrique à double paroi (66a-66b), muni d'une ouverture (66c) se présentant en regard de l'ouverture axiale (65a) du réceptacle (65), après sa rotation. L'intervalle entre les parois (66a-66b) permet de constituer une chambre étanche remplie d'huile et dans laquelle plongent des tubes chauffants (79) disposés longitudinalement et branchés à un circuit électrique.

La paroi intérieure du réceptacle (66) autorise, comme pour le réceptacle (65), le logement de pales alternées (80) semblables aux pales (69) et disposées angulairement et successivement en hélice sur un axe rotatif (81). Ce dernier est également entraîné en rotation par le moteur (70), au moyen de la poulie (82), ou encore directement, par un moteur réducteur. Il faut considérer également que le réceptacle (66) est rendu solidaire à son extrémité, d'un pignon (83) coopérant avec une crémaillère fixée sur le piston mobile (85a) d'un vérin (85) dont le fût est articulé sur un axe (86) solidaire de l'ossature. Ce vérin (85) autorise la rotation angulaire de 180 degrés du réceptacle (66), en vue du déversement du mélange chaud réduit à l'état pâteux, sur le transporteur à bande (67).

Il faut considérer également que les réceptacles (65 et 66) tournent dans un même sens en présentant pendant leur rotation, leur ouverture (65a-66c) en contact entre les portées arrondies d'un carter de retenue (84), comme illustré figures 14, 15 et 16. Cette disposition évite le renversement du produit mélange en dehors de l'ouverture (66c) sur le transporteur à bande (67).

Il est bien évident que les mécanismes de compactage et d'évacuation des briquettes, sont réalisés comme indiqué précédemment.

On remarque également que le produit agglomérant utilisé est de préférence une colle pulvérulente qui se ramollit sous l'effet de la chaleur. On souligne à cet effet, à titre nullement limitatif, l'emploi de la colle connue sous la désignation MEXPHALTE 85/2, utilisée pour la confection de bitume ou d'agglomérés de charbon. Selon les dispositions de cette réalisation, il convient d'en résumer les principales phases de fonctionnement :

— chargement quantitatif en sciure et en colle du réceptacle supérieur (65), au moyen de l'ouverture de la chambre (72), du doseur et du tube (75), et mélange de ces produits par les pales alternées (69) de l'axe (68) entraîné en rotation continue ;

— pivotement du réceptacle supérieur (65) au moyen du vérin (77) agissant sur le pignon (76), en vue de déverser le mélange dans l'ouverture supérieur (66c) du réceptacle inférieur (66) ;

— retour en position initiale du chargement du réceptacle supérieur (65) ;

— chauffage du réceptacle inférieur (66) de par les tubes chauffants (79), en vue d'obtenir, par suite de ramollissement de la colle, un état pâteux ou visqueux du mélange contenu, en combinaison avec le malaxage obtenu par la rotation continue des pales alternées (80) entraînées par l'axe (81) ;

— pivotement du réceptacle inférieur (66), au moyen du vérin (85) agissant sur le pignon (83), en vue de déverser le mélange chaud à l'état pâteux, sur le transporteur à bande (67) ;

— retour en position initiale de chargement du réceptacle inférieur (66) ;

— acheminement du produit pâteux dans l'ouverture du tiroir-chargeur et formation de briquettes ;

— évacuation par le tapis sans fin et réception.

## Revendications

1. Machine automatique pour la formation d'agglomérés combustibles à base de sciure de bois compactée et de colle, caractérisée en ce qu'elle comprend un bâti (1) avec un réceptacle supérieur (2) muni d'un moyen de distribution automatique de sciure de bois et de colle, pour l'obtention d'un mélange pâteux obtenu au moyen d'un organe de mélange : une trappe inférieure (3) avec dispositif de commande automatique par vérin pneumatique (22) pour autoriser l'écoulement du mélange pâteux dans un réceptacle inférieur (14) muni d'un moyen d'acheminement par vis (27) ou bande sans fin (55) avec palettes (56) dans une chambre de compactage (34) maintenue en position d'ouverture contrôlée au moyen d'un tiroir-chargeur (29) avec moyen de commande par vérin pneumatique (33) et dont la fermeture permet de par sa section, le compactage transversal et horizontal du produit (P), dans ladite chambre (34), et de par son ouverture supérieure (29³), le libre passage d'un plateau supérieur (35) logé dans la chambre (34) précitée, et commandé par un vérin pneumatique (36), en vue du compactage ; un moyen d'éjection de la briquette formée et logée dans la chambre (34), sur un tapis sans fin (52), après le recul du tiroir-chargeur (29), par l'intermédiaire d'un tiroir latéral (37) avec dispositif de commande par vérin pneumatique (38) agissant en combinaison par bielle (42), sur une roue à rochet (45) destinée à commander le déplacement intermittent dudit tapis (52) ; un moyen de séchage des briquettes disposées sur le tapis (52).

2. Machine selon la revendication 1, caractérisée en ce que l'organe de mélange de la sciure et de la colle logé dans le réceptacle supérieur (2), est un arbre rotatif (4) à section polygonale, muni suivant ses côtés respectifs, de pales méplates (5) disposées angulairement en alternance et suivant un cheminement hélicoïdal ; un moteur (6) coopérant par courroie (7) avec une poulie (8) clavetée sur la partie extérieure débordante dudit arbre (4).

3. Machine selon la revendication 1, caractérisée en ce que le réceptacle supérieur (2) reçoit au droit de son ouverture, un doseur rotatif (9) muni de palettes (10) pour permettre, lors de sa rotation partielle, le déversement quantitatif de sciure ; un deuxième doseur (12) avec boisseau intérieur rotatif (13), pour permettre lors de sa rotation partielle, en combinaison avec le doseur (9), l'écoulement quantitatif de la colle.

4. Machine selon la revendication 3, caractérisée en ce que la trappe inférieure (3) du réceptacle supérieur (2) reçoit transversalement à ses extrémités, deux blocs-crémaillères (16 et 17) qui engrènent simultanément avec des roues dentées (18 et 19) montées sur un seul arbre latéral (20) muni à l'une de ses extrémités d'une manivelle (21) accouplée à la tige (22¹) du vérin (22) fixé à l'ossature ; une bielle (24) accouplée à la manivelle (21), relie à articulation les extrémités des bras (25 et 26) montés respectivement en bout du boisseau (13) et de l'arbre d'entraînement des palettes (10), de manière que le développement de la tige (22¹) dudit vérin (22) provoque simultanément la commande d'ouverture de la trappe (3) et la commande de fermeture des doseurs (9 et 12).

5. Machine selon l'une des revendications 1, 2, 3 et 4, caractérisée en ce que le réceptacle inférieur (14) reçoit intérieurement et longitudinalement, une vis rotative entraînée par le moteur (6) et avec des spires hélicoïdales interrompues (27¹) pour acheminer le produit pâteux jusqu'à une extrémité débordante dudit réceptacle (14) muni d'une ouverture (14¹) disposée en regard de l'ouverture supérieure (29³) du tiroir-chargeur (29) en forme de U renversé ; ledit chargeur (29) guidé transversalement sur une plaque-support (32), constituant à l'avant un fond (29⁴) pour acheminer le produit dans l'enceinte de la chambre (34) de section correspondante, fixée verticalement sur ladite plaque-support (32), tandis qu'à l'opposé, le tiroir-chargeur précité (29) permet l'accouplement de la tige (33¹) d'un vérin (33) accouplé à l'arrière dans une chape (32¹) de la plaque-support (32).

6. Machine selon la revendication 5, caractérisée en ce qu'en position d'avancement et de compactage horizontal, le tiroir-chargeur (29) présente son ouverture (29³) dans l'intérieur de la chambre (34) et en regard de la section du plateau supérieur (35) du moyen de compactage vertical ; l'ouverture (14¹) du réceptacle (14) étant obturée dans cette position par la partie supérieure pleine dudit tiroir-chargeur (29).

7. Machine selon l'une des revendications 1, 2, 3, 4, 5, 6, caractérisée en ce que le plateau supérieur (35) logé à coulissement vertical dans la chambre (34), est sollicité par la tige (36¹) du vérin (36) fixé dans ladite chambre, pour passer au travers de l'ouverture (29³) du tiroir-chargeur (29) qui constitue par ses côtés latéraux et par son fond (29⁴), l'ensemble de compactage du produit.

8. Machine selon l'une des revendications 1, 2, 3, 4, 5, 6, 7, caractérisée en ce que les côtés transversaux de la chambre (34) sont ouverts pour permettre perpendiculairement d'un côté, après le recul et l'effacement du tiroir-chargeur (29), le passage du tiroir d'éjection (37) de la briquette, guidé et commandé par la tige mobile (38¹) du vérin (38) dont le fût est fixé à articulation dans une chape (39) solidaire de la plaque (32) ; ledit tiroir (37) acheminant la briquette sur l'extrémité du tapis sans fin (52) dont l'avancement pas à pas est obtenu en combinaison avec son déplacement.

9. Machine selon la revendication 8, caractérisée en ce que le tiroir (37) de section en U renversé, reçoit d'un côté un axe débordant (40) coulissant dans un guide (41) et accouplé à articulation à l'extrémité de la bielle (42) solidaire, d'une manière réglable en position, de l'extrémité d'un bras manivelle (43) centré librement sur un arbre (44) fixé transversalement sous la plaque (32) ; ledit bras (43) coopérant par cliquet (46), avec la roue à rochet (45) solidaire dudit arbre (44) pour son entraînement partiel en rotation, lors de l'avancement dudit tiroir (37) ; une roue dentée (47) clavetée sur l'arbre (44), transmettant le mouvement rotatif par chaîne (48), à un pignon multiplicateur (49) monté en bout de l'arbre (50) d'entraînement du tambour (51) du tapis sans fin (52), avec tambour de renvoi opposé (53).

10. Machine selon l'une des revendications 1, 2, 3, 4, 5, 6, 7, 8, 9, caractérisée en ce qu'un tunnel chauffant (54) est adjoint au-dessus du tapis sans fin (52) pour le séchage définitif des briquettes.

11. Machine selon l'une des revendications 1, 2, 3, 4, 5, 6, 7, 8, 9, 10, caractérisée en ce qu'en variante, le réceptacle inférieur (14) reçoit intérieurement, un transporteur à bande sans fin (55) muni de palettes (56), monté sur des tambours rotatifs (57 et 58) avec moyen de commande en rotation partielle pas à pas, par vérin (59) ; ledit transporteur (55) acheminant la pâte dans l'ouverture (29³) du tiroir (29).

12. Machine selon la revendication 11, caractérisée en ce que le vérin (59) fixé sur une patte-support (60) de l'ossature (1), permet de par sa tige mobile (61), le pivotement d'un levier (62) agissant de par son cliquet (63) sur une roue à rochet (64) montée sur l'arbre du tambour d'entraînement (57).

13. Machine selon l'une des revendications 1, 2, 3, 4, 5, 6, 7, 8, 9, 10, 11, 12, caractérisée en ce que la commande décalée des vérins (22, 33, 36 et 59), est assurée mécaniquement par un tambour rotatif muni périphériquement de cames débordantes pour agir sur des vannes d'ouverture et de fermeture.

14. Machine selon la revendication 1, caractérisée en ce qu'en variante, elle comprend un réceptacle supérieur pivotant (65) muni d'un moyen de distribution automatique de sciure humide et de colle à l'état pulvérulent, et d'un moyen de mélange de ces composants ; un dispositif de commande de retournement du réceptacle supérieur (65) pour l'écoulement du mélange dans un réceptacle inférieur (66) également pivotant, avec moyen de chauffage et de mélange pour la transformation dudit mélange en un état pâteux ou visqueux ; un dispositif de commande de retournement du réceptacle inférieur (66) pour l'écoulement du produit visqueux et chaud sur le moyen d'acheminement, par bande sans fin (67), dans la chambre de compactage, en vue de la formation des briquettes et leur évacuation.

15. Machine selon la revendication 14, caractérisée en ce que le réceptacle supérieur (65) muni d'une ouverture de chargement (65a), est monté axialement pivotant sur un axe rotatif (68) recevant des pales (69) de mélange de la sciure humide et de la colle pulvérulente, lesdites pales (69) disposées angulairement et en alternance suivant un cheminement hélicoïdal, étant réalisées en forme de T avec secteurs circulaires (69a) formant raclettes sur la paroi interne du réceptacle supérieur ; un moteur (70) coopérant indirectement par poulie (71) et courroie de liaison avec l'axe (68), ou indirectement, dans le cas d'un moteur-réducteur.

16. Machine selon la revendication 15, caractérisée en ce qu'un distributeur doseur de sciure est établi avec une chambre d'admission tronconique (72) disposée en regard de l'ouverture de chargement (65a) du réceptacle supérieur (65), et muni de disques étagés (73 et 74) montés sur un axe vertical rotatif (75¹) commandé en combinaison avec la commande de déplacement en rotation du réceptacle supérieur (65) ; des ouvertures diamétralement opposées des disques (73-74), autorisant de par leur positionnement circulaire, soit l'admission de la sciure dans la chambre (72) avec fermeture de l'évacuation, soit contrairement, l'ouverture de l'évacuation pour le chargement quantitatif du réceptacle (65) et fermeture de l'admission ; un tube (75) placé en regard de l'ouverture (65a) et muni de trous, assurant la distribution quantitative de colle à l'état pulvérulent.

17. Machine selon l'une des revendications 15, 16 caractérisée en ce que le réceptacle supérieur (65) centré sur l'axe (68), reçoit en bout, un pignon (76) pour coopérer avec une crémaillère montée sur le piston mobile (77a) d'un vérin (77) dont le fût est articulé sur un axe (78) solidaire de l'ossature de la dite machine ; le développement du piston mobile (77a) autorisant la rotation du réceptacle (65), en vue de la présentation inférieure de son ouverture (65a) en regard de l'ouverture du réceptacle inférieur (66), pour le déversement du mélange sciure et colle.

18. Machine selon l'une des revendications 14, 15, 16, 17, caractérisée en ce que le réceptacle inférieur (66) muni d'une ouverture de chargement (66c), est monté pivotant sur un axe rotatif (81) avec pales alternées (80) disposées conformément et semblables aux pales (69), et entraîné en rotation par une poulie (82) coopérant avec le moteur (70) ou encore directement par un moteur-réducteur ; ledit réceptacle (66) étant à double paroi (66a-66b) pour constituer une chambre étanche remplie d'un fluide avec tubes chauffants (79) branchés à un circuit électrique.

19. Machine selon l'une des revendications 14, 15, 16, 17, 18, caractérisée en ce que le réceptacle inférieur (66) centré sur l'axe (81) reçoit en bout un pignon (83) pour coopérer avec une crémaillère montée sur le piston mobile (85a) d'un vérin (85) dont le fût est articulé sur un axe (86) solidaire de l'ossature de ladite machine ; le développement du piston mobile (85a) autorisant la rotation du réceptacle (66), en vue de la présentation inférieure de son ouverture de chargement (66c), en regard du transporteur à bande (67).

20. Machine selon l'une des revendications 14, 15, 16, 17, 18, 19, caractérisée en ce que les ouvertures (65a-66c) des réceptacles (65-66), sont obturées lors de la rotation de ces derniers par les parties arrondies d'un carter (84).

21. Machine selon l'une des revendications 14, 15, 16, 17, 18, 19, 20, caractérisée en ce que la colle utilisée est une colle à l'état pulvérulent ayant la propriété de se ramollir sous l'effet de la chaleur.

## Claims

1. Automatic machine for the formation of fuel sinters on the basis of compacted sawdust and glue, characterized in that said machine includes : a framework (1) with an upper receptacle (2) provided with automatic means for the distribution of sawdust and glue in order to obtain a pasty mixture obtained by means of a mixing organ ; a lower trap-door (3) with automatic control device by means of air pressure cylinder (22) for permitting the flow of the pasty mixture in a lower receptacle (14) provided with advancement means through endless screw (27) or belt (55) with palettes (56) for advancing the mixture within a compacting chamber (34) maintained in a controlled opening position by means of a feeder slide-valve (29) with control means through air pressure cylinder (33), the closing thereof permitting, owing to the section thereof, the transverse and horizontal compacting of the product (P) within said chamber (34), the upper opening (29³) of this chamber permitting the free paszage of an upper plate (35) housed within the aforesaid chamber (34) and controlled by an air pressure cylinder (36) in order to effect the compacting ; means for discharging the compressed block formed and housed within the chamber (34) on a travelling band (52) after the return of the feeder slide-valve (29) through the intermediary of a lateral slide-valve (37) with control device through air pressure cylinder (38) actuating in combination, by means of a connecting rod (42), a ratchet-wheel (45) intended for controlling the intermittent travel of said travelling band (52) ; a drying means for the compressed blocks disposed on the travelling band (52).

2. Machine as claimed in claim 1, characterized in that the mixing organ for the sawdust and the glue, housed in the upper receptacle (2), is a rotary shaft (4) of polygonal section provided along the respective sides thereof with flattened blades (5) disposed angularly and alternately along a helicoidal path ; a motor (6) cooperating through a belt (7) with a pulley (8) keyed to the projecting external portion of said shaft (4).

3. Machine as claimed in claim 1, characterized in that the upper receptacle (2) receives at right angles to the opening thereof a feed regulator (9) provided with small blades (10) in order to permit, during the partial rotation thereof, the quantitative discharge of sawdust ; a second feed regulator (12) with inside rotary shell (13) permitting, during the partial rotation thereof, in combination with the feed regulator (9), the quantitative flow of the glue.

4. Machine as claimed in claim 3, characterized in that the lower trap-door (3) of the upper receptacle (2) receives transversely to the ends thereof two rack-blocks (16 and 17) meshing simultaneously with toothed wheels (18 and 19) mounted on a single lateral shaft (20) provided at one of the ends thereof with a crank (21) coupled to the rod (22¹) of the pressure cylinder 22 secured to the framework ; a connecting rod (24) coupled to the crank (21) connecting hingedly the ends of the arms (25 and 26) mounted respectively at the end of the shell (13) and of the driving shaft for the small blades (10), so that the advance of the rod (22¹) of said pressure cylinder (22) will cause simultaneously the actuation of opening control for the door-trap (3) and of closing control for the feed regulators (9 and 12).

5. Machine as claimed in any one of claims 1, 2, 3 and 4, characterized in that the lower receptacle (14) receives internally and longitudinally a rotary worm driven by the motor (6) and with interrupted helical turns (27¹) to direct the pasty product up to a projecting end of said receptacle (14) provided with an opening (14¹) disposed opposite the upper opening (29³) of a feeder slide-valve (29) in the form of an upturned U, said feeder (29) being guided transversely on a support-plate (32) constituting in front a bottom (294) to direct the product within the enclosure of the chamber (34) of corresponding section, secured vertically on said support-plate (32), while opposite thereto, the aforesaid feeder slide-valve (29) permits the coupling of the rod (33¹) of a pressure cylinder (33) coupled rearwardly within a yoke (32¹) of the support-plate (32).

6. Machine as claimed in claim 5, characterized in that the feeder slide-valve (29), in the horizontal advancement and compacting position, presents the opening (29³) thereof towards the inside of the chamber (34) and in front of the section of the upper plate (35) of the vertical compacting means ; the opening (14¹) of the receptacle (14) being obturated in this position by the solid upper portion of said feeder slide-valve (29).

7. Machine as claimed in any one of claims 1, 2, 3, 4, 5, 6, characterized in that the upper plate (35) housed slidably in the vertical direction within the chamber (34), is urged by the rod (36¹) of the pressure cylinder (36) secured within said chamber in order to extend through the opening (29³) of the feeder slide-valve (29) which constitutes by the lateral sides and the bottom (294) the assembly for compacting the product.

8. Machine as claimed in any one of claims 1, 2, 3, 4, 5, 6 and 7, characterized in that the transversal sides of the chamber (34) are open to permit perpendicularly, on one side, after the return and the collapsing of the feeder slide-valve (29), the passage of the ejector slide-valve (37) for the compressed block, guided and controlled by the movable rod (38¹) of the pressure cylinder (38) the barrel of which is secured hingedly within a yoke (39) integral with the plate (32) ; said slide-valve (37) directing the compressed block to the end of the travelling band (52) the step by step advancement of which is obtained in combination with the motion of said compressed block.

9. Machine as claimed in claim 8, characterized in that the slide-valve (37) of upturned U-section receives on one side a projecting pin (40) slidable within a guide (41) and coupled hingedly to the end of the connecting rod (42) made fast in an adjustable manner in the position thereof with the end of a crank arm (43) freely centered on a shaft (44) secured transversely under the plate (32) ; said arm (43) cooperating by pawl (46) with a ratchet wheel (45) made fast with said shaft (44) for the partial rotational driving thereof during the advancement of said slide-valve (37) ; a toothed wheel (47) keyed to the shaft (44) transmitting the rotary motion through a chain (48) to a transmission gear (49) mounted at the end of the driving shaft (50) for the drum (51) of travelling band (52), with opposite idle drum (53).

10. Machine as claimed in any one of claims 1, 2, 3, 4, 5, 6, 7, 8 and 9, characterized in that a heating tunnel (54) is added above the travelling band (52) for the final drying of the compressed blocks.

11. Machine as claimed in any one of claims 1, 2, 3, 4, 5, 6, 7, 8, 9 and 10, characterized in that, in an alternative form of embodiment, the lower receptacle (14) receives internally, an endless belt conveyor (55) provided with small blades (56), mounted on rotary drums (57) and (58) with control means for partial rotation step by step through pressure cylinder (59), said conveyor (55) directing the pasty product in the opening (29³) of slide-valve (29).

12. Machine as claimed in claim 11, characterized in that the pressure cylinder (59) secured on a support-lug (60) of framework (1) permits by means of the movable rod (61) thereof the pivotal motion of a lever (62) actuating by means of its pawl a ratchet wheel (64) mounted on the shaft of the driving drum (57).

13. Machine as claimed in any one of claims 1, 2, 3, 4, 5, 6, 7, 8, 9, 10, 11 and 12, characterized in that the offset control of the pressure cylinders (22, 33, 36 and 59) is provided mechanically by a rotary drum provided peripherally with projecting cams for the actuation of opening and closing valves.

14. Machine as claimed in claim 1, characterized in that, in an alternative form of embodiment, said machine includes : a pivoted upper receptacle (65) provided with an automatic distribution means for moist sawdust and glue in the pulverulent state and with a mixing means for these components ; a control device for the reversal of the upper receptacle (65) in order to cause the mixture to flow down within the lower receptacle (66) which is also pivoted, with heating and mixing means for the transformation of said mixture into a pasty or viscous state ; a control device for the reversal of the lower receptacle (66) in order to cause the hot and viscous product to flow down on the directing means by endless belt (67) and to bring the product within the compacting chamber, for the formation of the compressed blocks and the discharge thereof.

15. Machine as claimed in claim 14, characterized in that the upper receptacle (65) provided with a loading opening (65a) is mounted pivoted axially on a rotary pin (68) receiving the blades (69) for mixing the moist sawdust and the pulverulent glue, said blades (69) being disposed angularly and in an alternating manner along a helical path and formed in a T-shape with circular sectors (69a) for the formation of scrapers on the inside wall of the upper receptacle a motor (70) cooperating indirectly through a pulley (71) and a connecting belt with the pin (68), or directly in the case of a motor gearing device.

16. Machine as claimed in claim 15, characterized in that a sawdust feed regulating distributor is established with a tepering inlet chamber (72) disposed opposite the loading opening (65a) of the upper receptacle (65), and is provided with staged disks (73 and 74) mounted on a rotary vertical pin (75¹) driven in combination with the control for the rotational shifting of the upper receptacle (65), the diametrally opposed openings of the disks (73-74) permitting in accordance with their circular positioning either the inlet of the sawdust in the chamber (72) with closing of the discharge, or on the contrary the opening of the discharge for the quantitative loading of the receptacle (65) and the closing of the inlet ; a tube (75) placed opposite the opening (65a) and provided with holes distributing quantitatively the glue in the pulverulent state.

17. Machine as claimed in any one of claims 15, 16, characterized in that the upper receptacle (65), centered on the pin (68), receives at the end thereof a gear (76) for cooperation with a rack mounted on the movable piston (77a) of a pressure cylinder (77) the shell of which is secured hingedly on a pin (78) integral with the framework of said machine, the development of the movable piston (77a) permitting the rotation of the receptacle (65) for the lower presentation of its opening (65a) opposite the opening of the lower receptacle (66) for the flowing down of the sawdust and glue mixture.

18. Machine as claimed in any one of claims 14, 15, 16 and 17, characterized in that the lower receptacle (66) provided with a loading opening (66c) is mounted pivotally on a rotary pin (81) with staggered blades (80) disposed in a corresponding manner and similar to the blades (69), and is driven for rotation by a pulley (82) cooperating with the motor (70) or driven for rotation directly by a motor gear device, said receptacle (66) being with double wall (66a-66b) to constitute a sealed chamber filled with a fluid, with heating tubes (79) connected to an electrical circuit.

19. Machine as claimed in any one of claims 14, 15, 16, 17, 18, characterized in that the lower receptacle (66) centered on the pin (81) receives at the end thereof a gear (83) for cooperation with a rack mounted on the movable piston (85a) of a pressure cylinder (85) the shell of which is secured hingedly on a pin (86) integral with the framework of said machine, the development of the movable piston (85a) permitting the rotation of the receptacle (66) for the lower presentation of its loading opening (66c) opposite the band conveyor (67).

20. Machine as claimed in any one of claims 14, 15, 16, 17, 18 and 19, characterized in that the openings (65a-66c) of the receptacles (65-66) are obturated during the rotation of the latter by the rounded portions of a casing (84).

21. Machine as claimed in any one of claims 14, 15, 16, 17, 18, 19 and 20, characterized in that the glue used is a glue in the pulverulent state, having the property to soften under the action of heat.

**Ansprüche**

1. Automatische Maschine zur Herstellung von brikettierten Brennstoffen aus kompaktiertem Sägemehl und Klebstoff, dadurch gekennzeichnet, dass diese Maschine die folgenden Bauteile aufweist : ein Gestell (1) mit einer Obermulde (2) und einem Mittel zur automatischen Verteilung von Sägemehl und Klebstoff zur Herstellung einer mit einem Mischorgan verarbeiteten teigigen Mischung ; eine niedere Falltür (3) mit automatischer Steuerungsvorrichtung durch Luftdruckzylinder (22) zum Abfluss der teigigen Mischung in eine Untermulde (14) die mit einem Wurmmittel (27) oder einem Schneckenband (55) mit Schaufelchen zur Beförderung der Mischung in eine Kompaktierungskammer (34) versehen ist, die in einer Stellung gesteuerter Öffnung durch einen Beschickungsschieber (29) mit Steuerungsmittel durch Luftdruckzylinder (33) gehalten wird, wobei das Schliessen desselben aufgrund dessen Querschnitts die Querseitige und waagerechte Kompaktierung des Produkts (P) in der genannten Kammer (34) ermöglicht und aufgrund der oberen Öffnung (29³) den freien Durchgang einer in der genannten Kammer (34) untergebrachten und für die Kompaktierung durch einen Luftdruckzylinder (36) gesteuerten Oberplatte (35) gestattet; ein Auswurfmittel für das in der Kammer (34) gebildete und untergebrachte Brikett, zum Auswurf desselben auf einen endlosen Bandförderer (52) nach der Rückbewegung des Beschickungsschiebers (29), durch einen Seitenschieber (37) mit Antriebvorrichtung mittels eines in Kombination durch eine Pleuelstange (42) auf ein Klinkrad (45) wirkenden Luftdruckzylinders (38), wobei dieses Klinkrad für die Steuerung der aussetzenden Verschiebung des genannten Bandförderers (52) vorgesehen ist ; und ein Abtrocknungsmittel für die auf dem Bandförderer (52) befindlichen Brikette.

2. Maschine nach Anspruch 1, dadurch gekennzeichnet, dass das in der Obermulde (2) befindliche Mischungsorgan für das Sägemehl und den Klebstoff eine drehbare Welle (4) von vieleckigem Querschnitt ist, die ihre jeweilige Seiten entlang mit abwechselnden, abgeflachten und gemäss einer spiralförmigen Strecke angeordneten Schaufeln (5) versehen wird, wobei ein Motor (6) mittels eines Riemens (7) mit einer auf dem herausragenden Aussenteil der genannten Welle (4) festgekeilten Riemenscheibe (8) zusammenwirkt.

3. Maschine nach Anspruch 1, dadurch gekennzeichnet, dass die Obermulde (2) rechtswinklig zu derer Öffnung eine mit kleinen Schau-feln (10) versehene Dosiervorrichtung (9) aufnimmt, die drehbar angebracht ist, um während ihrer teilweisen Umdrehung die mengenmässige Sägemehlausschüttung zu gestatten, wobei diese Obermulde eine zweite Dosiervorrichtung (12) mit drehbarem Innengehäuse (13) auch aufnimmt, um während der teilweisen Umdrehung dieser zweiten Dosiervorrichtung im Kombination mit der Dosiervorrichtung (9) den mengenmässigen Klebstoffausfluss zu gestatten.

4. Maschine nach Anspruch 3, dadurch gekennzeichnet, dass die niedere Falltür (3) der Obermulde (2) querseitig zu deren Enden zwei Zahnstangen-Blöcke (16 und 17) aufnimmt, die gleichzeitig mit auf einer einzigen, an dem einen Ende mit einer mit der Stange (22¹) des am Gestell befestigten Druckzylinder (22) gekuppelten Kurbel (21) versehenen Seitenwelle (20) angebrachten Zahnrädern (18 und 19) ineinandergreifen, wovei eine mit der Kurbel (21) gekuppelte Pleulstange (24) die Enden der beziehungsweise am Ende des Gehäuses (13) und der Antriebwelle der kleinen Schaufeln (10) montierten Arme (25 und 26) gliederungsartif verbindet, damit das Ausfahren der Stange (22¹) des genannten Druckzylinders (22) die Steuerung zum Öffnen der Falltür (3) und die Steuerung zum Schliessen der Dosiervorrichtungen (9 und 12) gleichzeitig bewirkt.

5. Maschine nach einem der Ansprüche 1, 2, 3 und 4, dadurch gekennzeichnet, dass die Niedermulde (14) eine durch den Motor (6) angetriebene drehbare Schraube mit unterbrochenen spiralförmogen Windungen (27¹) zum Heranbringen des teigigen Produkts bis zu einem herausragenden Ende der genannten Mulde (14) innenseitig und längsseitig aufnimmt, die mit einer entgegengesetzt der oberen Öffnung (29³) eines umgekehrten U-förmigen Beschickungsschiebers (29) angebrachten Öffnung (14¹) versehen ist, wobei der genannte Beschickungsschieber (29) auf eine Tragplatte (32) querseitig geführt wird und am vorderen Ende einen Boden (29⁴) zum Heranbringen des Produkts in den Raum der Kammer (34) von entsprechendem Querschnitt bildet, die senkrecht auf der genannten Tragplatte (32) befestigt ist, während an der entgegengesetzten Seite der vorerwähnte Beschickungsschieber (29) die Kupplung der Stange (33¹) eines am hinteren Ende in eingem Bügel (32¹) der Tragplatte (32) gekuppelten Druckzylinders (33) gestattet.

6. Maschine nach Anspruch 5, dadurch gekennzeichnet, dass der Beschickungsschieber (29), in der Vorwärtsbewegungs- und Horizontalkompaktierungsstellung, seine Öffnung (29³) im Innenraum der Kammer (34) und entgegengesetzt dem Querschnitt der Oberplatte (35) des Vertikalkompaktierungsmittels aufweist, wobei die Öffnung (14¹) der Mulde (14) in dieser Stellung durch den oberen Vollteil des genannten Beschickungsschiebers (29) verschlossen wird.

7. Maschine nach einem der Ansprüche 1, 2, 3, 4, 5, 6, dadurch gekennzeichnet, dass die in die Kammer (34) senkrecht untergebrachte Oberplatte (35) durch die Stange (36¹) der in der genannten Kammer befestigten Druckzylinders (36) zum Durchfahren der Öffnung (293) des Beschickungsschiebers (29) beansprucht wird, wobei dieser Beschickungsschieber mit seinen seitlichen Seiten und seinen Boden (29⁴) das Aggregat für die Kompaktierung des Produkts bildet.

8. Maschine nach einem der Ansprüche 1, 2, 3, 4, 5, 6, 7, dadurch gekennzeichnet, dass die Querseiten der Kammer (34) zum lotrechten Durchfahren eines Brikettauswurfschiebers (37), auf einer Seite und nach der rückwärtigen Bewegung und dem Rückziehen des Beschickungsschiebers (2), geöffnet sind, wobei der Brikettauswurfschieber durch die bewegliche Stange (38¹) des Druckzylinders (38) geführt und gesteuert wird, dessen Gehäuse in einen mit der Platte (32) festgemachten Bügel (39) gelenkig befestigt ist, und der genannte Schieber (37) das Brikett auf das Ende des Bandförderers (52) zuführt, dessen schrittweise Vorwärtsbewegung in Kombination mit dessen Verschiebung erfolgt.

9. Maschine nach Anspruch 1, dadurch gekennzeichnet, dass der Schieber (37) von umgekehrten U-förmigen Querschnitt auf einer Seite eine in einer Führung (41) verschiebbare, am Ende der Pleuelstange (42) gekuppelte, herausragende Achse (40) aufnimmt ; dass diese Pleuelstange, in einer verstellbaren Weise hinsichtlich ihrer Lage, dem Ende eines Kurbelarms (43) zugeordnet ist, der auf eine unter der Platte (32) querseitig befestigte Welle (44) frei zentriert wird ; und dass der gennante Arm (43) durch eine Sperrklinke (46) mit dem der genannten Welle (44) zum teilweisen Drehantrieb bei der Vorwärtsbewegung des genannten Schiebers (37) zugeordneten Klinkrad (45) zusammenarbeitet, wobei ein auf der Welle (44) festgekeiltes Zahnrad (47) die Drehbewegung durch eine Kette (48) einem Übersetzungsgetrieberad (49) übermittelt, das am Ende der Welle (50) zum Antrieb der Trommel (51) des Bandförderers (52), mit entgegengesetzter Rückführungstrommel (53), montiert wird.

10. Maschine nach einem der Ansprüche 1, 2, 3, 4, 5, 6, 7, 8, 9, dadurch gekennzeichnet, dass ein Heizungstunnel (54) zum endgültigen Abtrocknen der Brikette über dem Bandförderer (52) angebaut ist.

11. Maschine nach einem der Ansprüche 1, 2, 3, 4, 5, 6, 7, 8, 9, 10, dadurch gekennzeichnet, dass in einer abgeanderten Ausführungsform die niedere Mulde (14) einen mit kleinen Schaufeln (56) versehenen Bandförderer (55) innerlich aufnimmt, der auf Drehtrommeln (57 und 58) mit einem Antriebmittel zur teliweisen, schrittweisen Umdrehung durch einen Druckzylinder (59) montiert ist, wobei der genannte Bandförderer (55) die teigige Masse in die Öffnung (29³) des Schiebers (29) zuführt.

12. Maschine nach Anspruch 11, dadurch gekennzeichnet, dass der auf einer Traglasche (60) des Gestells (1) befestigte Druckzylinder (59) durch dessen bewegliche Stange (61) das Verschwenken eines Hebels (62) gestattet, der mittels seiner Klinke (63) auf der Welle der Antriebtrommel (57) montiertes Klinkrad (64) einwirkt.

13. Maschine nach einem der Ansprüche 1, 2, 3, 4, 5, 6,7,8,9,10, 11, 12, dadurch gekennzeichnet, dass der verschobene Antrieb der Druckzylinder (22, 33, 36 und 59) mechanisch mittels einer Drehtrommel erfolgt, die auf dem Umfang mit herausragenden Kurven versehen ist, um auf Öffnungs- und Schliessungsventile einzuwirken.

14. Maschine nach Anspruch 1, dadurch gekennzeichnet, dass in einer abgewandelten Ausführungsform diese Maschine die folgenden Baueinheiten aufweist ; eine verschwenkbare Obermulde (65), die mit einem Mittel zur automatischen Verteilung von feuchtem Sägemehl und von Klebstoff in pulverförmigem Zustand und mit einem Mittel zur Mischung dieser Bestandteile versehen ist ; eine Steuervorrichtung zum Umwenden der Obermulde (65) für den Abfluss der Mischung in eine auch verschwenkbare niedere Mulde (66) mit Heizungs- und Mischungsmittel zur Verarbeitung der genannten Mischung in einen teigigen oder zähen Zustand ; eine Steuervorrichtung zum Umwenden der niederen Mulde (66) für den Abfluss des zähen und heissen Produkts auf das Beförderungsmittel, durch Bandförderer (67), zum Heranbringen des Produkts in die Kompaktierungskammer, damit die Brikette gebildet und ausgeworfen werden.

15. Maschine nach Anspruch 14, dadurch gekennzeichnet, dass die mit einer Beschickungsöffnung (65a) versehene Obermulde (65) auf eine drehbare, die Schaufeln (69 zur Mischung des feuchten Sägemehls und des pulverförmigen Klebstoffs aufnehmende Achse (68) achsial verschwenkbar montiert ist, wobei die winklig und abwechselnd gemäss einer schraubenförmigen Strecke angeordneten Schaufeln (69) T-förmig mit kreisförmigen Sektoren (69a) ausgestaltet sind, die auf der Innenwandung der Obermulde mehrere Rakeln bilden, und wobei ein Motor (70) mittelbar durch Riemenscheibe (71) und Übertragungsriemen, oder auch unmittelbar im Fall von Motorgetriebe, mit der Achse (68) zusammenwirkt.

16. Maschine nach Anspruch 15, dadurch gekennzeichnet, dass eine Verteilungs- und Dosiervorrichtung für das Sägemehl mit einer kegelstumpfigen, entgegengesetzt der Beschickungsöffnung (65a) der Obermulde (65) Einlasskammer vorgesehen und mit abgestuften Scheibeplatten (73 und 74) versehen ist, die auf eine drehbare, in Kombination mit dem Antrieb zur Umdrehungsverschiebung der Obermulde (65) gesteuerte, snekrechte Achse (75¹) montiert sind ; dass die hinsichtlich der Scheibeplatten (73-74) diametral entgegengesetzten vorgesehenen Öffnungen durch ihre kreisförmige Positionierung entweder den Einlass des Sägemehls in die Kammer (72) bei Auswurfschliessen oder im Gegenteil die Auswurfsöffnung zur mengenmässigen Beschickung der Mulde (65) beim Schliessen des Einlasses gestatten ; und dass ein entgegengesetzt der Öffnung (65a) liegendes, mit Bohrungen versehenes Rohr (75) die mengenmässige Verteilung von Klebstoff in pulverförmigem Zustand bewirkt.

17. Maschine nach einem der Ansprüche 15 und 16, dadurch gekennzeichnet, dass die auf der Achse (68) zentrierte Obermulde (65) am Ende ein Getrieberad (76) zur Mitwirkung mit einer Zahnstange aufnimmt, die auf dem beweglichen Kolben (77a) eines Druckzylinders (77) montiert ist, dessen Gehäuse auf eine dem Gestell der genannten Maschine zugeordnete Achse (78) gelenkig angeordnet wird, wobei das Ausfahren des beweglichen Kolbens (77a) die Umrehung der Mulde (65) gestattet, damit die Öffnung (65a) der genannten Mulde entgegengesetzt der Öffnung der niederen Mulde (66) zur Ausschüttung der Mischung von Sägemehl und Klebstoff nach unten zeigt.

18. Maschine nach einem der Ansprüche 14, 15, 16, 17, dadurch gekennzeichnet, dass die mit einer Beschickungsöffnung (66c) versehene niedere Mulde (66) auf eine Drehachse (81) mit abwechselnden, den Schaufeln (69) ähnlichen und entsprechend angeordneten Schaufeln (80) verschwenkbar montiert ist, wobei diese Achse durch eine Riemenscheibe (82) bei Mitwirken des Motors (70) oder auch unmittelbar durch Motorgetriebe drehbar angetrieben wird ; und dass die genannte Mulde (66) mit Doppelwandung (66a-66b) zur Bildung einer mit einer Flüssigkeit gefüllten abgedichteten Kammer mit Heizungsrohren (79) vorgesehen wird, die an einen elektrischen Stromkreis angeschlossen sind.

19. Maschine nach einem der Ansprüche 14, 15, 16, 17, 18, dadurch gekennzeichnet, dass die auf der Achse (81) zentrierte niedere Mulde (66) am Ende ein Getrieberad (83) zur Mitwirkung mit einer Zahnstange aufnimmt, die auf dem beweglichen Kolben (85a) eines Druckzylinders (85) montiert ist, dessen Gehäuse auf eine dem Gestell der gennanten Maschine zugeordnete Achse (86) gelenkig angeordnet wird, wobei das Ausfahren des beweglichen Kolbens (85a) die Umdrehung der Mulde (66) gestattet, damit ihre Beschickungsöffnung (66c) in Bezug auf den Bandförderer (67) nach unten zeigt.

20. Maschine nach einem der Ansprüche 14, 15, 16, 17, 18, 19, dadurch gekennzeichnet, dass die Öffnungen (65a-66c) der Mulden (65-66) während der Umdrehung letzterer durch die abgerundeten Teile einer Haube (84) verschlossen werden.

21. Maschine nach einem der Ansprüche 14, 15, 16, 17, 18, 19, 20, dadurch gekennzeichnet, dass der gebrauchte Klebstoff ein Klebstoff in pulverförmigem Zustand ist. der die Eigenschaft besitzt, unter Hitzewirkung weich zu werden.

FIG.1

FIG.2

FIG.3

FIG.4

FIG.5

FIG.6

FIG.7

2

FIG.9

FIG.8

FIG.10

FIG.14

FIG.12

FIG.11

FIG.13

FIG.15

FIG.16

0 067 778